# EUROPEAN PATENT APPLICATION

(11) **EP 4 362 572 A1**
(43) Date of publication of application: **01.05.2024**
(21) Application number: 22827689.5
(22) Date of filing: 24.06.2022
(51) Int. Cl.: H04W 64/00

(54) **POSITIONING PROCESSING METHOD, POSITIONING REFERENCE SIGNAL SENDING METHOD, APPARATUS, AND DEVICE**

(30) Priority: 25.06.2021 CN 202110710661
(71) Applicant: VIVO MOBILE COMMUNICATION CO., LTD., Dongguan, Guangdong 523863 (CN)
(72) Inventor: ZHUANG, Zixun, Dongguan, Guangdong 523863 (CN); WANG, Yuanyuan, Dongguan, Guangdong 523863 (CN); SI, Ye, Dongguan, Guangdong 523863 (CN); WU, Huaming, Dongguan, Guangdong 523863 (CN)
(74) Representative: Murgitroyd & Company
(86) International application number: PCT/CN2022/101051
(87) International publication number: WO 2022/268197

(57) **Abstract**

This application discloses a positioning processing method and apparatus, a positioning reference signal sending method and apparatus, and a device, and pertains to the field of communications technologies. The positioning processing method in embodiments of this application includes: receiving, by a first device, a first positioning reference signal; and measuring and/or reporting, by the first device, first measurement information based on the first positioning reference signal; where the first measurement information includes at least one of the following: first-path measurement information; additional-path measurement information; frequency domain measurement information; and antenna measurement information.

## Description

### CROSS-REFERENCE TO RELATED APPLICATION

This application claims priority to Chinese Patent Application No. 202110710661.3, filed in China on June 25, 2021, which is incorporated herein by reference in its entirety.

### TECHNICAL FIELD

This application pertains to the field of communications technologies, and specifically relates to a positioning processing method and apparatus, a positioning reference signal sending method and apparatus, and a device.

### BACKGROUND

During positioning researches, high-precision positioning requirements are imposed. However, in scenarios with complex multipath and a large number of non-line-of-sight (Not Line Of Sight, NLOS) cases (such as smart factory scenarios with high article density), a time- and angle-based positioning scheme is greatly affected by multipath and NLOS, significantly reducing the positioning precision performance. Machine learning-based positioning or fingerprint-based positioning methods can effectively resolve the problems caused by multipath and NLOS to implement higher precision. However, in NLOS scenarios, there is significant random variation in the channel impulse response of nearby terminals, resulting in a decrease in performance of trained models. Training based on specific channel features such as a first-path (first path) phase difference and additional-path (additional path) phase difference between antennas can effectively improve positioning precision.

Currently, in uplink angle of arrival (Uplink Angle of Arrival, UL-AoA) positioning, it is agreed to report UL-AoA measurement values of M>1 first paths. In downlink angle of departure (Downlink Angle of Departure, DL-AoD) positioning, it is agreed to perform research on and report several pieces of first-path related information, such as reference signal received power (Reference Signal Receiving Power, RSRP) of the first path, angle of departure, time of arrival, and phase of channel impulse response (Channel Impulse Response, CIR).

However, the current technology does not specify how terminals and base stations measure or report first-path related measurement information.

### SUMMARY

Embodiments of this application provide a positioning processing method and apparatus, a positioning reference signal sending method and apparatus, and a device, so as to resolve the problem of how terminals and base stations measure or report first path/additional path/antenna/frequency domain-related measurement information in the prior art.

According to a first aspect, a positioning processing method is provided, including:
receiving, by a first device, a first positioning reference signal; and
measuring and/or reporting, by the first device, first measurement information based on the first positioning reference signal; where the first measurement information includes at least one of the following:
   first-path measurement information;
   additional-path measurement information;
   frequency domain measurement information; and
   antenna measurement information.

According to a second aspect, a positioning reference signal sending method is provided, including:
sending, a second device, first positioning reference signal according to second indication information, where the second indication information includes at least one of the following:
the number of ports allowed to be mapped by the first positioning reference signal;
identification information of a mapping port of the first positioning reference signal;
the number of panels allowed to be mapped by the first positioning reference signal;
identification information of a mapping panel of the first positioning reference signal;
the number of antenna elements allowed to be mapped by the first positioning reference signal; and identification information of a mapping antenna element of the first positioning reference signal.

According to a third aspect, a positioning processing method is provided, including:
receiving, by a third device, first measurement information reported by a first device, where the first measurement information includes at least one of the following:
first-path measurement information;
additional-path measurement information;
frequency domain measurement information; and
antenna measurement information.

According to a fourth aspect, a positioning processing apparatus is provided, including:
a first receiving module, configured to receive a first positioning reference signal; and
a processing module, configured to measure and/or report first measurement information based on the first positioning reference signal; where the first measurement information includes at least one of the following:
   first-path measurement information;
   additional-path measurement information;
   frequency domain measurement information; and
   antenna measurement information.

According to a fifth aspect, a positioning reference signal sending apparatus is provided, including:
a first sending module, configured to send first positioning reference signal according to second indication information, where the second indication information includes at least one of the following:
the number of ports allowed to be mapped by the first positioning reference signal;
identification information of a mapping port of the first positioning reference signal;
the number of panels allowed to be mapped by the first positioning reference signal;
identification information of a mapping panel of the first positioning reference signal;
the number of antenna elements allowed to be mapped by the first positioning reference signal; and
identification information of a mapping antenna element of the first positioning reference signal.

According to a sixth aspect, a positioning processing apparatus is provided, including:
a second receiving module, configured to receive first measurement information reported by a first device, where the first measurement information includes at least one of the following:
first-path measurement information;
additional-path measurement information;
frequency domain measurement information; and
antenna measurement information.

According to a seventh aspect, a communication device is provided, where the communication device includes a processor, a memory, and a program or instructions stored in the memory and executable on the processor, and when the program or instructions are executed by the processor, the steps of the method according to the first aspect are implemented, or the steps of the method according to the second aspect are implemented; or the steps of the method according to the third aspect are implemented.

According to an eighth aspect, a first device is provided, including a processor and a communication interface, where the communication interface is configured to receive a first positioning reference signal; and the processor is configured to measure and /or report first measurement information based on the first positioning reference signal; where the first measurement information includes at least one of the following:
first-path measurement information;
additional-path measurement information;
frequency domain measurement information; and
antenna measurement information.

According to a ninth aspect, a second device is provided, including a processor and a communication interface, where the processor is configured to send a first positioning reference signal through the communication interface according to second indication information, where the second indication information includes at least one of the following:
the number of ports allowed to be mapped by the first positioning reference signal;
identification information of a mapping port of the first positioning reference signal;
the number of panels allowed to be mapped by the first positioning reference signal;
identification information of a mapping panel of the first positioning reference signal;
the number of antenna elements allowed to be mapped by the first positioning reference signal; and
identification information of a mapping antenna element of the first positioning reference signal.

According to a tenth aspect, a third device is provided, including a processor and a communication interface, where the communication interface is configured to receive first measurement information reported by a first device, and the first measurement information includes at least one of the following:
first-path measurement information;
additional-path measurement information;
frequency domain measurement information; and
antenna measurement information.

According to an eleventh aspect, a readable storage medium is provided, where a program or instructions are stored in the readable storage medium; and when the program or instructions are executed by a processor, the steps of the method according to the first aspect are implemented, or the steps of the method according to the second aspect are implemented, or the steps of the method according to the third aspect are implemented.

According to a twelfth aspect, a chip is provided, where the chip includes a processor and a communication interface, the communication interface is coupled to the processor, and the processor is configured to run a program or instructions to implement the method according to the first aspect, or implement the method according to the second aspect, or implement the method according to the third aspect.

According to a thirteenth aspect, a computer program product is provided, where the computer program product is stored in a non-volatile storage medium, and the computer program product is executed by at least one processor to implement the steps of the method according to the first aspect, or the steps of the method according to the second aspect, or implement the steps of the method according to the third aspect.

According to a fourteenth aspect, a communication device is provided, configured to execute the steps of the method according to the first aspect, or execute the steps of the method according to the second aspect, or execute the steps of the method according to the third aspect.

In the embodiments of this application, the first device measures and/or reports at least one of the first-path measurement information, the additional-path measurement information, the frequency domain measurement information, and the antenna measurement information based on the first positioning reference signal, which can improve precision of machine learning-based positioning or carrier phase-based positioning.

### BRIEF DESCRIPTION OF DRAWINGS

FIG. 1 is a block diagram of a wireless communication system to which the embodiments of this application are applicable;
FIG. 2 is a first flowchart of steps of a positioning processing method according to an embodiment of this application;
FIG. 3 is a flowchart of steps of a positioning reference signal sending method according to an embodiment of this application;
FIG. 4 is a second flowchart of steps of a positioning processing method according to an embodiment of this application;
FIG. 5 is a first schematic structural diagram of a positioning processing apparatus according to an embodiment of this application;
FIG. 6 is a schematic structural diagram of a positioning reference signal sending apparatus according to an embodiment of this application;
FIG. 7 is a second schematic structural diagram of a positioning processing apparatus according to an embodiment of this application;
FIG. 8 is a schematic structural diagram of a communication device according to an embodiment of this application;
FIG. 9 is a schematic structural diagram of a terminal according to an embodiment of this application; and
FIG. 10 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, in the specification and claims, "and/or" represents presence of at least one of connected objects, and the symbol "/" in this specification usually indicates an "or" relationship between associated objects.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

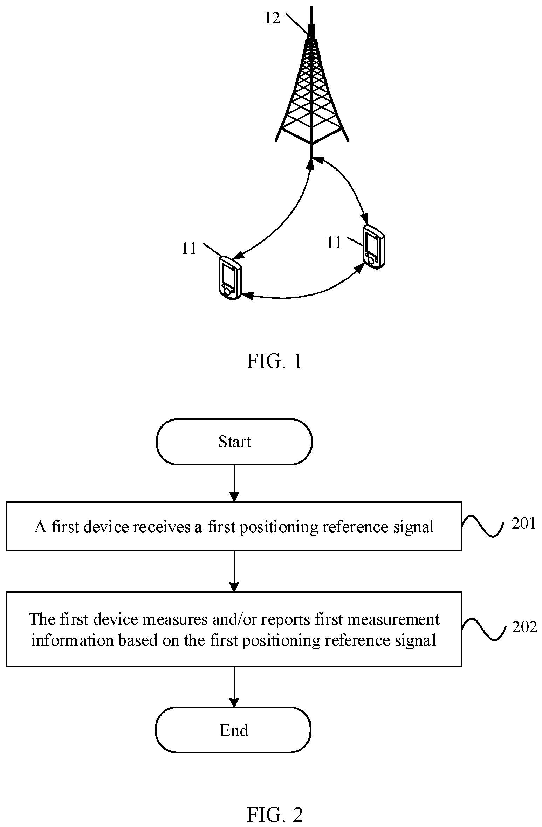

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, WiFi) node, a transmission and reception Point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a positioning processing method and apparatus, a positioning reference signal sending method and apparatus, and a device provided in the embodiments of this application by using specific embodiments and application scenarios thereof with reference to the accompanying drawings.

As shown in FIG. 2, at least one embodiment of this application provides a positioning processing method, including:
Step 201: A first device receives a first positioning reference signal.
Step 202: The first device measures and/or reports first measurement information based on the first positioning reference signal, where the first measurement information includes at least one of the following:
   first-path measurement information;
   additional-path measurement information;
   frequency domain measurement information; and
   antenna measurement information.

In this embodiment of this application, the first device is a base station or a terminal; the base station includes but is not limited to a common base station, a relay-node-type base station, and the like. The terminal includes but is not limited to a common terminal, a relay terminal, and a vehicle terminal, a pedestrian terminal, and a roadside unit RSU in sidelink (sidelink) communication, and so on. When the first device is a terminal, the terminal receives the first positioning reference signal sent by a terminal or a base station; and when the first device is a base station, the base station receives the first positioning reference signal sent by a terminal or a base station.

Optionally, the first device reports the first measurement information to a third device. The third device is a core network device, such as a location management function (Location Management Function, LMF) network element or a network element with a specific function (such as a core-network network element for sensing).

In an optional embodiment, the first positioning reference signal includes at least one of the following:
PRS (Positioning Reference Signals, positioning reference signal);
SRS (Sounding Reference Signal, sounding reference signal);
CSI-RS (Channel State Information Reference Signal, channel state information reference signal);
TRS (Tracking Reference Signal, tracking reference signal);
SSB (Synchronization Signal and PBCH block, synchronization signal/physical broadcast channel block, or synchronization signal block); and
sidelink (sidelink or direct communication link) reference signal.

In at least one optional embodiment of this application, the method further includes:
receiving, by the first device, first indication information, where the first indication information is used to indicate at least one of the following of the first measurement information that is measured and/or reported by the first device:
type of the first measurement information; and
quantity of the first measurement information.

Optionally, the first indication information is sent by the third device to the first device.

In an optional embodiment of this application, the first indication information may indicate the type of the first measurement information in an explicit indication manner, or may indicate the type of the first measurement information in an implicit indication manner, so that the first device can provide more measurement information to the third device to further improve positioning precision.

On the one hand, in the explicit indication manner, the first indication information carries first information for explicitly indicating the type of the first measurement information; and the first information includes at least one of the following:
first-path measurement information;
additional-path measurement information;
frequency domain measurement information;
antenna measurement information;
delay information;
phase information;
energy information;
angle information;
delay difference information;
phase difference information;
energy difference information;
angle difference information;
subcarrier phase information;
subcarrier energy information;
subcarrier phase difference information; and
subcarrier energy difference information.

In an optional embodiment, the first-path measurement information, additional-path measurement information, frequency domain measurement information, antenna measurement information, and the like included in the first information are different from the first-path measurement information, additional-path measurement information, frequency domain measurement information, antenna measurement information, and the like included in the first measurement information. For example, the first-path measurement information included in the first information may be an identifier of the first-path measurement information or a type of the first-path measurement information, which is used to indicate the first device to measure and/or report the first-path measurement information; and the first-path measurement information included in the first measurement information is specific content of the first-path measurement information, such as first-path phase information of at least one positioning reference signal. For another example, the first information is a bit string for indicating the type of the first measurement information; for example, the first information is a bit string with a length of 2 bits. If the first information is "00", it can be understood that the first information includes the first-path measurement information; if the first information is "01", it can be understood that the first information includes the additional-path measurement information; if the first information is "10", it can be understood that the first information includes the frequency domain measurement information; if the first information is "11", it can be understood that the first information includes the antenna measurement information. A specific value of the foregoing bit information is an optional example, and other values are also applicable to this application, which is not enumerated one by one herein.

On the other hand, in the implicit indication manner, the first indication information carries a positioning method for implicitly indicating a type of the first measurement information corresponding to the positioning method; and the positioning method includes at least one of the following:
carrier phase-based positioning; and
machine learning-based positioning.

For example, when the positioning method indicated by the first indication information is carrier phase-based positioning or machine learning-based positioning, the type of the first measurement information includes: frequency domain measurement information.

It should be noted that the number of pieces of first measurement information is a positive integer greater than 0, including at least one of the following: the number of pieces of first-path measurement information; the number of pieces of additional-path measurement information.

For example, if the first-path measurement information includes delay information and phase information, and the number of pieces of first-path measurement information is 2, it means to measure and/or report delay information and phase information corresponding to two sets of first path; if the first-path measurement information includes only first-path subcarrier phase difference information on different antenna elements and the number of pieces of first-path measurement information is 4, four groups of first-path subcarrier phase difference information on different antenna elements are measured and/or reported.

In at least one embodiment of this application, the first-path measurement information includes at least one of the following:
first-path phase information of at least one positioning reference signal;
first-path phase information of at least one receive beam;
first-path phase information of at least one antenna element, panel, or port;
first-path phase difference information of different antenna elements, panels, or ports;
first-path phase difference information of different positioning reference signals;
first-path time information of at least one positioning reference signal;
first-path time information of at least one receive beam;
first-path time information of at least one antenna element, panel, or port;
first-path time difference information of different antenna elements, panels, or ports;
first-path time difference information of different positioning reference signals;
first-path energy information of at least one positioning reference signal;
first-path energy information of at least one receive beam;
first-path energy information of at least one antenna element, panel, or port;
first-path energy difference information of different antenna elements, panels, or ports;
first-path energy difference information of different positioning reference signals;
first-path angle information of at least one positioning reference signal;
first-path angle information of at least one receive beam;
first-path angle information of at least one antenna panel or port;
first-path angle difference information of different antenna panels or ports; and
first-path angle difference information of different positioning reference signals.

The first-path time information includes: at least one of reference signal time difference (Reference Signal Time Difference, RSTD), time of arrival (Time of Arrival, TOA), and transmit-receive time difference (Rx-Tx timing difference).

In at least one embodiment of this application, the additional-path measurement information includes at least one of the following:
additional-path phase information of at least one positioning reference signal;
additional-path phase information of at least one receive beam;
additional-path phase information of at least one antenna element, panel, or port;
additional-path phase difference information of different antenna elements, panels, or ports;
additional-path phase difference information of different positioning reference signals;
additional-path time information of at least one positioning reference signal;
additional-path time information of at least one receive beam;
additional-path time information of at least one antenna element, panel, or port;
additional-path time difference information of different antenna elements, panels, or ports;
additional-path time difference information of different positioning reference signals;
additional-path energy information of at least one positioning reference signal;
additional-path energy information of at least one receive beam;
additional-path energy information of at least one antenna element, panel, or port;
additional-path energy difference information of different antenna elements, panels, or ports;
additional-path energy difference information of different positioning reference signals;
additional-path angle information of at least one positioning reference signal;
additional-path angle information of at least one receive beam;
additional-path angle information of at least one antenna panel or port;
additional-path angle difference information of different antenna panels or ports; and
additional-path angle difference information of different positioning reference signals.

The additional-path time information includes: at least one of reference signal time difference (Reference Signal Time Difference, RSTD), time of arrival (Time of Arrival, TOA), and transmit-receive time difference (Rx-Tx timing difference).

In at least one embodiment of this application, the frequency domain measurement information includes at least one of the following:
first-path energy information of a subcarrier on at least one antenna element, panel, or port;
additional-path energy information of a subcarrier on at least one antenna element, panel, or port;
first-path phase information of a subcarrier on at least one antenna element, panel, or port;
additional-path phase information of a subcarrier on at least one antenna element, panel, or port;
first-path energy information of a subcarrier for at least one positioning reference signal;
additional-path energy information of a subcarrier for at least one positioning reference signal;
first-path phase information of a subcarrier for at least one positioning reference signal;
additional-path phase information of a subcarrier for at least one positioning reference signal;
first-path energy difference information of subcarriers on different antenna elements, panels, or ports;
additional-path energy difference information of subcarriers on different antenna elements, panels, or ports;
first-path energy difference information of subcarriers for different positioning reference signals;
additional-path energy difference information of subcarriers for different positioning reference signals;
first-path phase difference information of subcarriers on different antenna elements, panels, or ports;
additional-path phase difference information of subcarriers on different antenna elements, panels, or ports;
first-path phase difference information of subcarriers for different positioning reference signals;
additional-path phase difference information of subcarriers for different positioning reference signals;
energy information of a subcarrier on at least one antenna element, panel, or port;
phase information of a subcarrier on at least one antenna element, panel, or port;
energy information of a subcarrier for at least one positioning reference signal;
phase information of a subcarrier for at least one positioning reference signal;
energy difference information of subcarriers on different antenna elements, panels, or ports;
phase difference information of subcarriers on different antenna elements, panels, or ports;
energy difference information of subcarriers for different positioning reference signals; and
phase difference information of subcarriers for different positioning reference signals.

Optionally, the reporting form of the frequency domain measurement information includes at least one of the following:
a form of function fitting, such as Gaussian function or trigonometric function fitting;
a tabular form, for example, one subcarrier index (index) corresponding to one measurement value; and
a list form, for example, measurement values of each subcarrier are reported in the form of a list.

The subcarrier is determined based on subcarrier preprocessing information indicated by a third device or specified by a protocol; or, when there is no subcarrier preprocessing information, the subcarriers are all subcarriers matching the bandwidth. Optionally, the subcarrier preprocessing information includes at least one of the following:
subcarrier sampling rate;
subcarrier sampling function;
subcarrier truncation length; and
subcarrier set.

In an optional embodiment, the subcarrier includes any one of the following:
all subcarriers matching a bandwidth;
part of subcarriers sampled based on a sampling rate or sampling function;
part of subcarriers truncated based on a subcarrier truncation length; and
a subcarrier indicated in a subcarrier set.

In at least one embodiment of this application, the antenna measurement information includes at least one of the following:
phase information of at least one antenna element, panel, or port;
energy information of at least one antenna element, panel, or port;
time information of at least one antenna element, panel, or port;
angle information of at least one antenna element, panel, or port;
phase difference information of at least one antenna element, panel, or port;
energy difference information of at least one antenna element, panel, or port;
time difference information of at least one antenna element, panel, or port; and
angle difference information of at least one antenna element, panel, or port.

In an optional embodiment, the different positioning reference signals include at least one of the following:
different positioning reference signals in a same positioning reference signal resource set; and
different positioning reference signals in a same positioning reference signal resource subset; where
the positioning reference signal resource subset is predefined by a protocol or configured by a network.

Optionally, the positioning reference signal resource subset may be a smaller part obtained through division from a same positioning reference signal resource set; or positioning reference signal resources transmitted on a group of different antenna ports; or positioning reference signal resources transmitted on a same group of antenna ports.

Correspondingly, in at least one embodiment of this application, the method further includes:
receiving, by the first device, first configuration information, where the first configuration information includes at least one of the following:
the number of positioning reference signals in a positioning reference signal resource subset;
identification information of the positioning reference signals in the positioning reference signal resource subset; and
index information of the positioning reference signal resource subset.

In this embodiment of this application, the first device can determine information related to a positioning reference signal resource subset based on the first configuration information, so as to determine information about different positioning reference signals involved in the first measurement information.

In at least one embodiment of this application, the method further includes:
receiving, by the first device, assistance information, where the assistance information is used to assist measurement and/or reporting of the first measurement information, and the assistance information includes at least one of the following:
identification information of a reference antenna element;
identification information of a reference antenna port;
identification information of a reference antenna panel;
the number of antenna elements for which measurement and/or reporting is requested;
the number of antenna ports for which measurement and/or reporting is requested;
the number of antenna panels for which measurement and/or reporting is requested;
identification information of an antenna element for which measurement and/or reporting is requested;
identification information of an antenna port for which measurement and/or reporting is requested;
identification information of an antenna panel for which measurement and/or reporting is requested; and
subcarrier preprocessing information, where the subcarrier preprocessing information is used to assist in measurement and/or reporting of the frequency domain measurement information.

The identification information of the reference antenna element, the identification information of the reference antenna port, and the identification information of the reference antenna panel are used to indicate a reference antenna element, reference antenna port, and reference antenna panel used during reporting of the first measurement information to the first device. When the first measurement information includes difference information of a specific measurement quantity (such as phase difference, angle difference, or time difference), the difference information is relative to the indicated reference antenna element, reference antenna port or reference antenna panel.

Optionally, the assistance information is sent to the first device by the third device.

The subcarrier preprocessing information includes at least one of the following:
subcarrier sampling rate;
subcarrier sampling function;
subcarrier truncation length; and
subcarrier set.

For example, if there are 3000 subcarriers and a subcarrier sampling interval is 2, the first device determines measurement information of 1500 subcarriers based on the sampling interval of 2; if the subcarrier truncation length is 256, the first device determines measurement information of the first 245 subcarriers.

In at least one embodiment of this application, the first measurement information further includes at least one of the following:
identification information of a reference antenna element;
identification information of a reference antenna port;
identification information of a reference antenna panel;
identification information of an antenna element for measurement and/or reporting;
identification information of an antenna port for measurement and/or reporting; and
identification information of an antenna panel for measurement and/or reporting.

The identification information of the reference antenna element, the identification information of the reference antenna port, and the identification information of the reference antenna panel are used to indicate a reference antenna element, reference antenna port, and reference antenna panel used during reporting of the first measurement information to the first device. When the first measurement information includes difference information of a specific measurement quantity (such as phase difference, angle difference, or time difference), the difference information is relative to the indicated reference antenna element, reference antenna port or reference antenna panel.

In at least one embodiment of this application, the method further includes:
sending, by the first device, positioning capability information to a third device, where the positioning capability information is used to indicate at least one of the following:
whether measurement and/or reporting of first-path measurement information is supported;
the number of first paths supported for measurement and/or reporting;
the number of measurement values reportable for each first path;
whether measurement and/or reporting of additional-path measurement information is supported;
the number of additional paths supported for measurement and/or reporting;
the number of measurement values reportable for each additional path;
whether measurement and/or reporting for multi-antenna elements is supported;
the number of antenna elements supported for measurement and/or reporting;
the number of measurement values reportable for each antenna element;
whether measurement and/or reporting for multi-antenna ports is supported;
the number of antenna ports supported for measurement and reporting;
the number of measurement values reportable for each antenna port;
whether measurement and/or reporting for multi-antenna panels is supported;
the number of antenna panels supported for measurement and/or reporting; and
the number of measurement values reportable for each antenna panel.

Optionally, based on the capability information, the third device can send, to the first device, the first indication information for indicating the first device to measure and/or report the first measurement information.

In this embodiment of this application, the first device measures and/or reports at least one of the first-path measurement information, the additional-path measurement information, the frequency domain measurement information, and the antenna measurement information based on the first positioning reference signal, which can improve precision of machine learning-based positioning or carrier phase-based positioning.

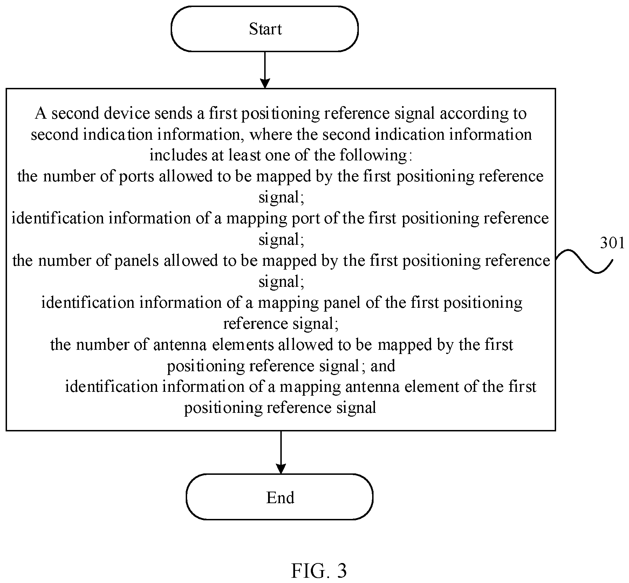

As shown in FIG. 3, an embodiment of this application further provides a positioning reference signal sending method including:
Step 301: A second device sends a first positioning reference signal according to second indication information, where the second indication information includes at least one of the following:
the number of ports allowed to be mapped by the first positioning reference signal;
identification information of a mapping port of the first positioning reference signal;
the number of panels allowed to be mapped by the first positioning reference signal;
identification information of a mapping panel of the first positioning reference signal;
the number of antenna elements allowed to be mapped by the first positioning reference signal; and
identification information of a mapping antenna element of the first positioning reference signal.

In this embodiment of this application, the second device is a base station or a terminal; the base station includes but is not limited to a common base station, a relay-node-type base station, and the like. The terminal includes but is not limited to a common terminal, a relay terminal, and a vehicle terminal, a pedestrian terminal, and a roadside unit RSU in sidelink (sidelink) communication, and so on. When the second device is a base station, the base station sends the first positioning reference signal to a terminal or other base stations; and when the second device is a terminal, the terminal sends the first positioning reference signal to a base station or other terminals.

Optionally, the second indication information is sent to the second device by a third device, where the third device is a core network device, such as a location management function (Location Management Function, LMF) network element, or a network element with a specific function (such as a core-network network element for sensing).

In an optional embodiment, the first positioning reference signal includes at least one of the following:
positioning reference signal (Positioning Reference Signals, PRS)
sounding reference signal (Sounding Reference Signal, SRS);
channel state information reference signal (Channel State Information Reference Signal, CSI-RS);
tracking reference signal (Tracking reference signal, TRS);
synchronization signal/physical broadcast channel signal block, or synchronization signal block (Synchronization Signal and PBCH block, SSB); and
sidelink or direct communication link (Sidelink) reference signal.

In this embodiment of this application, the second device maps the first positioning reference signal to the corresponding port, panel, or antenna element according o an indication of the second indication information, so that the first device receiving the first positioning reference signal can implement measurement and/or reporting of the first measurement information based on the first positioning reference signal, thereby achieving positioning precision.

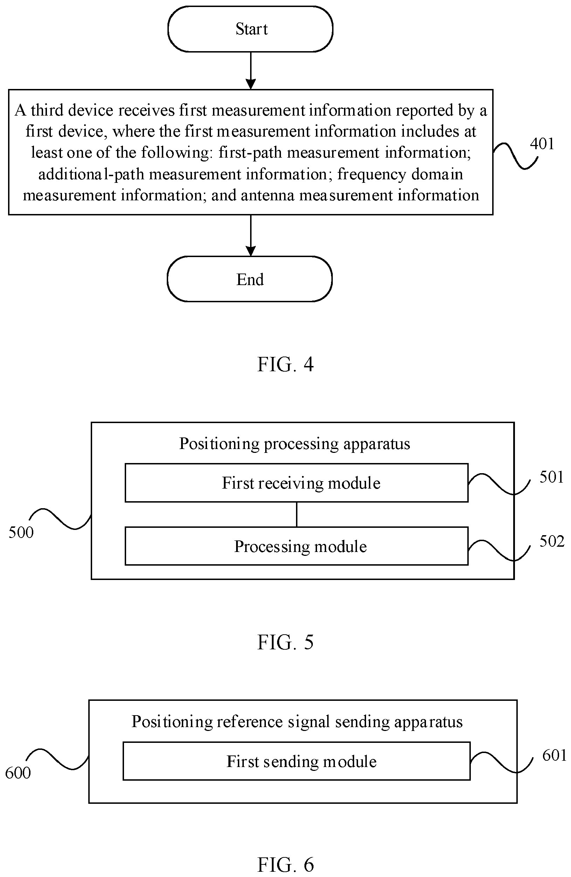

As shown in FIG. 4, an embodiment of this application further provides a positioning processing method including:

Step 401: A third device receives first measurement information reported by a first device, where the first measurement information includes at least one of the following: first-path measurement information; additional-path measurement information; frequency domain measurement information; and antenna measurement information.

In this embodiment of this application, the first device is a base station or a terminal; the third device is a core network device, such as a location management function (Location Management Function, LMF) network element, or a network element with a specific function (such as a core-network network element for sensing).

In at least one optional embodiment of this application, the method further includes:
sending, by the third device, first indication information to the first device, where the first indication information is used to indicate at least one of the following of the first measurement information that is measured and/or reported by the first device:
type of the first measurement information; and
quantity of the first measurement information.

In an optional embodiment of this application, the first indication information may indicate the type of the first measurement information in an explicit indication manner, or may indicate the type of the first measurement information in an implicit indication manner, so that the first device can provide more measurement information to the third device to further improve positioning precision.

On the one hand, in the explicit indication manner, the first indication information carries first information for explicitly indicating the type of the first measurement information; and the first information includes at least one of the following:
first-path measurement information;
additional-path measurement information;
frequency domain measurement information;
antenna measurement information;
delay information;
phase information;
energy information;
angle information;
delay difference information;
phase difference information;
energy difference information;
angle difference information;
subcarrier phase information;
subcarrier energy information;
subcarrier phase difference information; and
subcarrier energy difference information.

On the other hand, in the implicit indication manner, the first indication information carries a positioning method for implicitly indicating a type of the first measurement information corresponding to the positioning method; and the positioning method includes at least one of the following:
carrier phase-based positioning; and
machine learning-based positioning.

For example, when the positioning method indicated by the first indication information is carrier phase-based positioning or machine learning-based positioning, the type of the first measurement information includes: frequency domain measurement information.

It should be noted that the number of pieces of first measurement information is a positive integer greater than 0, including at least one of the following: the number of pieces of first-path measurement information; the number of pieces of additional-path measurement information.

For example, if the first-path measurement information includes delay information and phase information, and the number of pieces of first-path measurement information is 2, it means to measure and/or report delay information and phase information corresponding to two sets of first path; if the first-path measurement information includes only first-path subcarrier phase difference information on different antenna elements and the number of pieces of first-path measurement information is 4, four groups of first-path subcarrier phase difference information on different antenna elements are measured and/or reported.

In at least one embodiment of this application, the first-path measurement information includes at least one of the following:
first-path phase information of at least one positioning reference signal;
first-path phase information of at least one receive beam;
first-path phase information of at least one antenna element, panel, or port;
first-path phase difference information of different antenna elements, panels, or ports;
first-path phase difference information of different positioning reference signals;
first-path time information of at least one positioning reference signal;
first-path time information of at least one receive beam;
first-path time information of at least one antenna element, panel, or port;
first-path time difference information of different antenna elements, panels, or ports;
first-path time difference information of different positioning reference signals;
first-path energy information of at least one positioning reference signal;
first-path energy information of at least one receive beam;
first-path energy information of at least one antenna element, panel, or port;
first-path energy difference information of different antenna elements, panels, or ports;
first-path energy difference information of different positioning reference signals;
first-path angle information of at least one positioning reference signal;
first-path angle information of at least one receive beam;
first-path angle information of at least one antenna panel or port;
first-path angle difference information of different antenna panels or ports; and
first-path angle difference information of different positioning reference signals.

The first-path time information includes: at least one of reference signal time difference (Reference Signal Time Difference, RSTD), time of arrival (Time of Arrival, TOA), and transmit-receive time difference (Rx-Tx timing difference).

In at least one embodiment of this application, the additional-path measurement information includes at least one of the following:
additional-path phase information of at least one positioning reference signal;
additional-path phase information of at least one receive beam;
additional-path phase information of at least one antenna element, panel, or port;
additional-path phase difference information of different antenna elements, panels, or ports;
additional-path phase difference information of different positioning reference signals;
additional-path time information of at least one positioning reference signal;
additional-path time information of at least one receive beam;
additional-path time information of at least one antenna element, panel, or port;
additional-path time difference information of different antenna elements, panels, or ports;
additional-path time difference information of different positioning reference signals;
additional-path energy information of at least one positioning reference signal;
additional-path energy information of at least one receive beam;
additional-path energy information of at least one antenna element, panel, or port;
additional-path energy difference information of different antenna elements, panels, or ports;
additional-path energy difference information of different positioning reference signals;
additional-path angle information of at least one positioning reference signal;
additional-path angle information of at least one receive beam;
additional-path angle information of at least one antenna panel or port;
additional-path angle difference information of different antenna panels or ports; and
additional-path angle difference information of different positioning reference signals.

The additional-path time information includes: at least one of reference signal time difference (Reference Signal Time Difference, RSTD), time of arrival (Time of Arrival, TOA), and transmit-receive time difference (Rx-Tx timing difference).

In at least one embodiment of this application, the frequency domain measurement information includes at least one of the following:
first-path energy information of a subcarrier on at least one antenna element, panel, or port;
additional-path energy information of a subcarrier on at least one antenna element, panel, or port;
first-path phase information of a subcarrier on at least one antenna element, panel, or port;
additional-path phase information of a subcarrier on at least one antenna element, panel, or port;
first-path energy information of a subcarrier for at least one positioning reference signal;
additional-path energy information of a subcarrier for at least one positioning reference signal;
first-path phase information of a subcarrier for at least one positioning reference signal;
additional-path phase information of a subcarrier for at least one positioning reference signal;
first-path energy difference information of subcarriers on different antenna elements, panels, or ports;
additional-path energy difference information of subcarriers on different antenna elements, panels, or ports;
first-path energy difference information of subcarriers for different positioning reference signals;
additional-path energy difference information of subcarriers for different positioning reference signals;
first-path phase difference information of subcarriers on different antenna elements, panels, or ports;
additional-path phase difference information of subcarriers on different antenna elements, panels, or ports;
first-path phase difference information of subcarriers for different positioning reference signals;
additional-path phase difference information of subcarriers for different positioning reference signals;
energy information of a subcarrier on at least one antenna element, panel, or port;
phase information of a subcarrier on at least one antenna element, panel, or port;
energy information of a subcarrier for at least one positioning reference signal;
phase information of a subcarrier for at least one positioning reference signal;
energy difference information of subcarriers on different antenna elements, panels, or ports;
phase difference information of subcarriers on different antenna elements, panels, or ports;
energy difference information of subcarriers for different positioning reference signals; and
phase difference information of subcarriers for different positioning reference signals.

Optionally, the reporting form of the frequency domain measurement information includes at least one of the following:
a form of function fitting, such as Gaussian function or trigonometric function fitting;
a tabular form, for example, one subcarrier index (index) corresponding to one measurement value; and
a list form, for example, measurement values of each subcarrier are reported in the form of a list.

The subcarrier is determined based on subcarrier preprocessing information, and the subcarrier preprocessing information is indicated by the third device or specified by a protocol; or when there is no subcarrier preprocessing information, the subcarriers are all subcarriers matching the bandwidth. Optionally, the subcarrier preprocessing information includes at least one of the following:
subcarrier sampling rate;
subcarrier sampling function;
subcarrier truncation length; and
subcarrier set.

In an optional embodiment, the subcarrier includes any one of the following:
all subcarriers matching a bandwidth;
part of subcarriers sampled based on a sampling rate or sampling function;
part of subcarriers truncated based on a subcarrier truncation length; and
a subcarrier indicated in a subcarrier set.

In at least one embodiment of this application, the antenna measurement information includes at least one of the following:
phase information of at least one antenna element, panel, or port;
energy information of at least one antenna element, panel, or port;
time information of at least one antenna element, panel, or port;
angle information of at least one antenna element, panel, or port;
phase difference information of at least one antenna element, panel, or port;
energy difference information of at least one antenna element, panel, or port;
time difference information of at least one antenna element, panel, or port; and
angle difference information of at least one antenna element, panel, or port.

In an optional embodiment, the different positioning reference signals include at least one of the following:
different positioning reference signals in a same positioning reference signal resource set; and
different positioning reference signals in a same positioning reference signal resource subset; where
the positioning reference signal resource subset is predefined by a protocol or configured by a network.

Optionally, the positioning reference signal resource subset may be a smaller part obtained through division from a same positioning reference signal resource set; or positioning reference signal resources transmitted on a group of different antenna ports; or positioning reference signal resources transmitted on a same group of antenna ports.

Correspondingly, in at least one embodiment of this application, the method further includes:
sending, by the third device, first configuration information to the first device, where the first configuration information includes at least one of the following:
the number of positioning reference signals in a positioning reference signal resource subset;
identification information of the positioning reference signals in the positioning reference signal resource subset; and
index information of the positioning reference signal resource subset.

In this embodiment of this application, the first device can determine information related to a positioning reference signal resource subset based on the first configuration information, so as to determine information about different positioning reference signals involved in the first measurement information.

In at least one embodiment of this application, the method further includes:
sending, by the third device, assistance information to the first device, where the assistance information is used to assist measurement and/or reporting of the first measurement information, and the assistance information includes at least one of the following:
identification information of a reference antenna element;
identification information of a reference antenna port;
identification information of a reference antenna panel;
the number of antenna elements for which measurement and/or reporting is requested;
the number of antenna ports for which measurement and/or reporting is requested;
the number of antenna panels for which measurement and/or reporting is requested;
identification information of an antenna element for which measurement and/or reporting is requested;
identification information of an antenna port for which measurement and/or reporting is requested;
identification information of an antenna panel for which measurement and/or reporting is requested; and
subcarrier preprocessing information, where the subcarrier preprocessing information is used to assist in measurement and/or reporting of the frequency domain measurement information.

The identification information of the reference antenna element, the identification information of the reference antenna port, and the identification information of the reference antenna panel are used to indicate a reference antenna element, reference antenna port, and reference antenna panel used during reporting of the first measurement information to the first device. When the first measurement information includes difference information of a specific measurement quantity (such as phase difference, angle difference, or time difference), the difference information is relative to the indicated reference antenna element, reference antenna port or reference antenna panel.

The subcarrier preprocessing information includes at least one of the following:
subcarrier sampling rate;
subcarrier sampling function;
subcarrier truncation length; and
subcarrier set.

For example, if there are 3000 subcarriers and a subcarrier sampling interval is 2, the first device determines measurement information of 1500 subcarriers based on the sampling interval of 2; if the subcarrier truncation length is 256, the first device determines measurement information of the first 245 subcarriers.

In at least one embodiment of this application, the first measurement information further includes at least one of the following:
identification information of a reference antenna element;
identification information of a reference antenna port;
identification information of a reference antenna panel;
identification information of an antenna element for measurement and/or reporting;
identification information of an antenna port for measurement and/or reporting; and
identification information of an antenna panel for measurement and/or reporting.

The identification information of the reference antenna element, the identification information of the reference antenna port, and the identification information of the reference antenna panel are used to indicate a reference antenna element, reference antenna port, and reference antenna panel used during reporting of the first measurement information to the first device. When the first measurement information includes difference information of a specific measurement quantity (such as phase difference, angle difference, or time difference), the difference information is relative to the indicated reference antenna element, reference antenna port or reference antenna panel.

In at least one embodiment of this application, the method further includes:
receiving, by the third device, positioning capability information sent by the first device, where the positioning capability information is used to indicate at least one of the following:
whether measurement and/or reporting of first-path measurement information is supported;
the number of first paths supported for measurement and/or reporting;
the number of measurement values reportable for each first path;
whether measurement and/or reporting of additional-path measurement information is supported;
the number of additional paths supported for measurement and/or reporting;
the number of measurement values reportable for each additional path;
whether measurement and/or reporting for multi-antenna elements is supported;
the number of antenna elements supported for measurement and/or reporting;
the number of measurement values reportable for each antenna element;
whether measurement and/or reporting for multi-antenna ports is supported;
the number of antenna ports supported for measurement and reporting;
the number of measurement values reportable for each antenna port;
whether measurement and/or reporting for multi-antenna panels is supported;
the number of antenna panels supported for measurement and/or reporting; and
the number of measurement values reportable for each antenna panel.

Optionally, based on the capability information, the third device can send, to the first device, the first indication information for indicating the first device to measure and/or report the first measurement information.

In this embodiment of this application, the third device receives at least one of the first-path measurement information, the additional-path measurement information, the frequency domain measurement information, and the antenna measurement information reported by the first device, which can improve precision of machine learning-based positioning or carrier phase-based positioning. The third device can explicitly or implicitly indicate the type of the first measurement information by using the first indication information, so that more measurement information can be provided to the third device to further improve the positioning precision.

It should be noted that, for the positioning processing method or the positioning reference signal sending method provided in the embodiments of this application, the execution body may be a positioning processing apparatus or a positioning reference signal sending apparatus, or a control module in the positioning processing apparatus or the positioning reference signal sending apparatus for executing the positioning processing method or the positioning reference signal sending method. In the embodiments of this application, the positioning processing apparatus or the positioning reference signal sending apparatus provided in the embodiments of this application is described by using the positioning processing apparatus or the positioning reference signal sending apparatus executing the positioning processing method or the positioning reference signal sending method as an example.

As shown in FIG. 5, an embodiment of this application further provides a positioning processing apparatus 500 including:
a first receiving module 501, configured to receive a first positioning reference signal; and
a processing module 502, configured to measure and/or report first measurement information based on the first positioning reference signal; where the first measurement information includes at least one of the following:
   first-path measurement information;
   additional-path measurement information;
   frequency domain measurement information; and
   antenna measurement information.

In an optional embodiment, the method further includes:
a third receiving module, configured to receive first indication information, where the first indication information is used to indicate at least one of the following of the first measurement information that is measured and/or reported by the first device:
type of the first measurement information; and
quantity of the first measurement information.

In an optional embodiment, the first indication information carries first information for explicitly indicating the type of the first measurement information; and the first information includes at least one of the following:
first-path measurement information;
additional-path measurement information;
frequency domain measurement information;
antenna measurement information;
delay information;
phase information;
energy information;
angle information;
delay difference information;
phase difference information;
energy difference information;
angle difference information;
subcarrier phase information;
subcarrier energy information;
subcarrier phase difference information; and
subcarrier energy difference information.

In an optional embodiment, the first indication information carries a positioning method for implicitly indicating a type of the first measurement information corresponding to the positioning method; and the positioning method includes at least one of the following:
carrier phase-based positioning; and
machine learning-based positioning.

In an optional embodiment, the first-path measurement information includes at least one of the following:
first-path phase information of at least one positioning reference signal;
first-path phase information of at least one receive beam;
first-path phase information of at least one antenna element, panel, or port;
first-path phase difference information of different antenna elements, panels, or ports;
first-path phase difference information of different positioning reference signals;
first-path time information of at least one positioning reference signal;
first-path time information of at least one receive beam;
first-path time information of at least one antenna element, panel, or port;
first-path time difference information of different antenna elements, panels, or ports;
first-path time difference information of different positioning reference signals;
first-path energy information of at least one positioning reference signal;
first-path energy information of at least one receive beam;
first-path energy information of at least one antenna element, panel, or port;
first-path energy difference information of different antenna elements, panels, or ports;
first-path energy difference information of different positioning reference signals;
first-path angle information of at least one positioning reference signal;
first-path angle information of at least one receive beam;
first-path angle information of at least one antenna panel or port;
first-path angle difference information of different antenna panels or ports; and
first-path angle difference information of different positioning reference signals.

In an optional embodiment, the additional-path measurement information includes at least one of the following:
additional-path phase information of at least one positioning reference signal;
additional-path phase information of at least one receive beam;
additional-path phase information of at least one antenna element, panel, or port;
additional-path phase difference information of different antenna elements, panels, or ports;
additional-path phase difference information of different positioning reference signals;
additional-path time information of at least one positioning reference signal;
additional-path time information of at least one receive beam;
additional-path time information of at least one antenna element, panel, or port;
additional-path time difference information of different antenna elements, panels, or ports;
additional-path time difference information of different positioning reference signals;
additional-path energy information of at least one positioning reference signal;
additional-path energy information of at least one receive beam;
additional-path energy information of at least one antenna element, panel, or port;
additional-path energy difference information of different antenna elements, panels, or ports;
additional-path energy difference information of different positioning reference signals;
additional-path angle information of at least one positioning reference signal;
additional-path angle information of at least one receive beam;
additional-path angle information of at least one antenna panel or port;
additional-path angle difference information of different antenna panels or ports; and
additional-path angle difference information of different positioning reference signals.

In an optional embodiment, the frequency domain measurement information includes at least one of the following:
first-path energy information of a subcarrier on at least one antenna element, panel, or port;
additional-path energy information of a subcarrier on at least one antenna element, panel, or port;
first-path phase information of a subcarrier on at least one antenna element, panel, or port;
additional-path phase information of a subcarrier on at least one antenna element, panel, or port;
first-path energy information of a subcarrier for at least one positioning reference signal;
additional-path energy information of a subcarrier for at least one positioning reference signal;
first-path phase information of a subcarrier for at least one positioning reference signal;
additional-path phase information of a subcarrier for at least one positioning reference signal;
first-path energy difference information of subcarriers on different antenna elements, panels, or ports;
additional-path energy difference information of subcarriers on different antenna elements, panels, or ports;
first-path energy difference information of subcarriers for different positioning reference signals;
additional-path energy difference information of subcarriers for different positioning reference signals;
first-path phase difference information of subcarriers on different antenna elements, panels, or ports;
additional-path phase difference information of subcarriers on different antenna elements, panels, or ports;
first-path phase difference information of subcarriers for different positioning reference signals;
additional-path phase difference information of subcarriers for different positioning reference signals;
energy information of a subcarrier on at least one antenna element, panel, or port;
phase information of a subcarrier on at least one antenna element, panel, or port;
energy information of a subcarrier for at least one positioning reference signal;
phase information of a subcarrier for at least one positioning reference signal;
energy difference information of subcarriers on different antenna elements, panels, or ports;
phase difference information of subcarriers on different antenna elements, panels, or ports;
energy difference information of subcarriers for different positioning reference signals; and
phase difference information of subcarriers for different positioning reference signals.

In an optional embodiment, the subcarrier is determined based on subcarrier preprocessing information indicated by a third device or specified by a protocol.

In an optional embodiment, the subcarrier includes any one of the following:
all subcarriers matching a bandwidth;
part of subcarriers sampled based on a sampling rate or sampling function;
part of subcarriers truncated based on a subcarrier truncation length; and
a subcarrier indicated in a subcarrier set.

In an optional embodiment, the antenna measurement information includes at least one of the following:
phase information of at least one antenna element, panel, or port;
energy information of at least one antenna element, panel, or port;
time information of at least one antenna element, panel, or port;
angle information of at least one antenna element, panel, or port;
phase difference information of at least one antenna element, panel, or port;
energy difference information of at least one antenna element, panel, or port;
time difference information of at least one antenna element, panel, or port; and
angle difference information of at least one antenna element, panel, or port.

In an optional embodiment, the different positioning reference signals include at least one of the following:
different positioning reference signals in a same positioning reference signal resource set; and
different positioning reference signals in a same positioning reference signal resource subset; where
the positioning reference signal resource subset is predefined by a protocol or configured by a network.

In an optional embodiment, the apparatus further includes:
a fourth receiving module, configured to receive first configuration information, where the first configuration information includes at least one of the following:
the number of positioning reference signals in a positioning reference signal resource subset;
identification information of the positioning reference signals in the positioning reference signal resource subset; and
index information of the positioning reference signal resource subset.

In an optional embodiment, the apparatus further includes:
a fifth receiving module, configured to receive assistance information, where the assistance information is used to assist measurement and/or reporting of the first measurement information, and the assistance information includes at least one of the following:
identification information of a reference antenna element;
identification information of a reference antenna port;
identification information of a reference antenna panel;
the number of antenna elements for which measurement and/or reporting is requested;
the number of antenna ports for which measurement and/or reporting is requested;
the number of antenna panels for which measurement and/or reporting is requested;
identification information of an antenna element for which measurement and/or reporting is requested;
identification information of an antenna port for which measurement and/or reporting is requested;
identification information of an antenna panel for which measurement and/or reporting is requested; and
subcarrier preprocessing information.

In an optional embodiment, the subcarrier preprocessing information includes at least one of the following:
subcarrier sampling rate;
subcarrier sampling function;
subcarrier truncation length; and
subcarrier set.

In an optional embodiment, the first measurement information further includes at least one of the following:
identification information of a reference antenna element;
identification information of a reference antenna port;
identification information of a reference antenna panel;
identification information of an antenna element for measurement and/or reporting;
identification information of an antenna port for measurement and/or reporting; and
identification information of an antenna panel for measurement and/or reporting.

In an optional embodiment, the apparatus further includes:
a second sending module, configured to send positioning capability information to a third device, where the positioning capability information is used to indicate at least one of the following:
whether measurement and/or reporting of first-path measurement information is supported;
the number of first paths supported for measurement and/or reporting;
the number of measurement values reportable for each first path;
whether measurement and/or reporting of additional-path measurement information is supported;
the number of additional paths supported for measurement and/or reporting;
the number of measurement values reportable for each additional path;
whether measurement and/or reporting for multi-antenna elements is supported;
the number of antenna elements supported for measurement and/or reporting;
the number of measurement values reportable for each antenna element;
whether measurement and/or reporting for multi-antenna ports is supported;
the number of antenna ports supported for measurement and reporting;
the number of measurement values reportable for each antenna port;
whether measurement and/or reporting for multi-antenna panels is supported;
the number of antenna panels supported for measurement and/or reporting; and
the number of measurement values reportable for each antenna panel.

In this embodiment of this application, the first device measures and/or reports at least one of the first-path measurement information, the additional-path measurement information, the frequency domain measurement information, and the antenna measurement information based on the first positioning reference signal, which can improve precision of machine learning-based positioning or carrier phase-based positioning. The third device can explicitly or implicitly indicate the type of the first measurement information by using the first indication information, so that more measurement information can be provided to the third device to further improve the positioning precision.

It should be noted that the positioning processing apparatus provided in the embodiments of this application is an apparatus capable of executing the foregoing positioning processing method, and all embodiments of the foregoing positioning processing method are applicable to the apparatus, with the same or similar beneficial effects achieved.

As shown in FIG. 6, an embodiment of this application further provides a positioning reference signal sending apparatus 600 including:
a first sending module 601, configured to send first positioning reference signal according to second indication information, where the second indication information includes at least one of the following:
the number of ports allowed to be mapped by the first positioning reference signal;
identification information of a mapping port of the first positioning reference signal;
the number of panels allowed to be mapped by the first positioning reference signal;
identification information of a mapping panel of the first positioning reference signal;
the number of antenna elements allowed to be mapped by the first positioning reference signal; and
identification information of a mapping antenna element of the first positioning reference signal.

In this embodiment of this application, the second device maps the first positioning reference signal to the corresponding port, panel, or antenna element according o an indication of the second indication information, so that the first device receiving the first positioning reference signal can implement measurement and/or reporting of the first measurement information based on the first positioning reference signal, thereby achieving positioning precision.

It should be noted that the positioning reference signal sending apparatus provided by this embodiment of this application is an apparatus capable of executing the positioning reference signal sending method, and all embodiments of the positioning reference signal sending method are applicable to the apparatus, with the same or similar beneficial effects achieved.

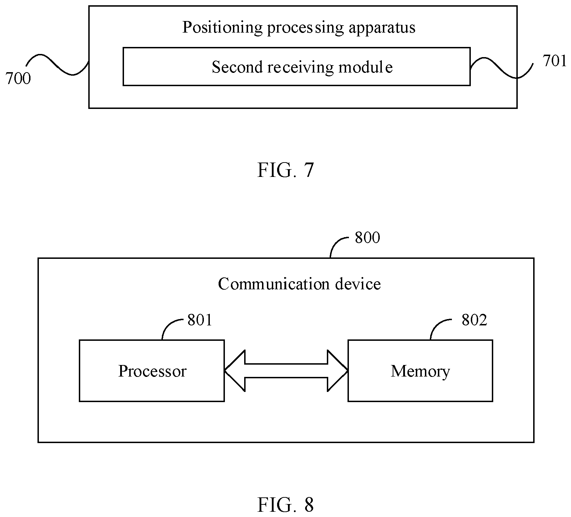

As shown in FIG. 7, an embodiment of this application further provides a positioning processing apparatus 700 including:
a second receiving module 701, configured to receive first measurement information reported by a first device, where the first measurement information includes at least one of the following:
first-path measurement information;
additional-path measurement information;
frequency domain measurement information; and
antenna measurement information.

In an optional embodiment, the apparatus further includes:
a third sending module, configured to send first indication information to the first device, where the first indication information is used to indicate at least one of the following of the first measurement information that is measured and/or reported by the first device:
type of the first measurement information; and
quantity of the first measurement information.

In an optional embodiment, the first indication information carries first information for explicitly indicating the type of the first measurement information; and the first information includes at least one of the following:
first-path measurement information;
additional-path measurement information;
frequency domain measurement information;
antenna measurement information;
delay information;
phase information;
energy information;
angle information;
delay difference information;
phase difference information;
energy difference information;
angle difference information;
subcarrier phase information;
subcarrier energy information;
subcarrier phase difference information; and
subcarrier energy difference information.

In an optional embodiment, the first indication information carries a positioning method for implicitly indicating a type of the first measurement information corresponding to the positioning method; and the positioning method includes at least one of the following:
carrier phase-based positioning; and
machine learning-based positioning.

In an optional embodiment, the first-path measurement information includes at least one of the following:
first-path phase information of at least one positioning reference signal;
first-path phase information of at least one receive beam;
first-path phase information of at least one antenna element, panel, or port;
first-path phase difference information of different antenna elements, panels, or ports;
first-path phase difference information of different positioning reference signals;
first-path time information of at least one positioning reference signal;
first-path time information of at least one receive beam;
first-path time information of at least one antenna element, panel, or port;
first-path time difference information of different antenna elements, panels, or ports;
first-path time difference information of different positioning reference signals;
first-path energy information of at least one positioning reference signal;
first-path energy information of at least one receive beam;
first-path energy information of at least one antenna element, panel, or port;
first-path energy difference information of different antenna elements, panels, or ports;
first-path energy difference information of different positioning reference signals;
first-path angle information of at least one positioning reference signal;
first-path angle information of at least one receive beam;
first-path angle information of at least one antenna panel or port;
first-path angle difference information of different antenna panels or ports; and
first-path angle difference information of different positioning reference signals.

In an optional embodiment, the additional-path measurement information includes at least one of the following:
additional-path phase information of at least one positioning reference signal;
additional-path phase information of at least one receive beam;
additional-path phase information of at least one antenna element, panel, or port;
additional-path phase difference information of different antenna elements, panels, or ports;
additional-path phase difference information of different positioning reference signals;
additional-path time information of at least one positioning reference signal;
additional-path time information of at least one receive beam;
additional-path time information of at least one antenna element, panel, or port;
additional-path time difference information of different antenna elements, panels, or ports;
additional-path time difference information of different positioning reference signals;
additional-path energy information of at least one positioning reference signal;
additional-path energy information of at least one receive beam;
additional-path energy information of at least one antenna element, panel, or port;
additional-path energy difference information of different antenna elements, panels, or ports;
additional-path energy difference information of different positioning reference signals;
additional-path angle information of at least one positioning reference signal;
additional-path angle information of at least one receive beam;
additional-path angle information of at least one antenna panel or port;
additional-path angle difference information of different antenna panels or ports; and
additional-path angle difference information of different positioning reference signals.

In an optional embodiment, the frequency domain measurement information includes at least one of the following:
first-path energy information of a subcarrier on at least one antenna element, panel, or port;
additional-path energy information of a subcarrier on at least one antenna element, panel, or port;
first-path phase information of a subcarrier on at least one antenna element, panel, or port;
additional-path phase information of a subcarrier on at least one antenna element, panel, or port;
first-path energy information of a subcarrier for at least one positioning reference signal;
additional-path energy information of a subcarrier for at least one positioning reference signal;
first-path phase information of a subcarrier for at least one positioning reference signal;
additional-path phase information of a subcarrier for at least one positioning reference signal;
first-path energy difference information of subcarriers on different antenna elements, panels, or ports;
additional-path energy difference information of subcarriers on different antenna elements, panels, or ports;
first-path energy difference information of subcarriers for different positioning reference signals;
additional-path energy difference information of subcarriers for different positioning reference signals;
first-path phase difference information of subcarriers on different antenna elements, panels, or ports;
additional-path phase difference information of subcarriers on different antenna elements, panels, or ports;
first-path phase difference information of subcarriers for different positioning reference signals;
additional-path phase difference information of subcarriers for different positioning reference signals;
energy information of a subcarrier on at least one antenna element, panel, or port;
phase information of a subcarrier on at least one antenna element, panel, or port;
energy information of a subcarrier for at least one positioning reference signal;
phase information of a subcarrier for at least one positioning reference signal;
energy difference information of subcarriers on different antenna elements, panels, or ports;
phase difference information of subcarriers on different antenna elements, panels, or ports;
energy difference information of subcarriers for different positioning reference signals; and
phase difference information of subcarriers for different positioning reference signals.

In an optional embodiment, the subcarrier is determined based on subcarrier preprocessing information, and the subcarrier preprocessing information is indicated by the third device or specified by a protocol.

In an optional embodiment, the subcarrier includes any one of the following:
all subcarriers matching a bandwidth;
part of subcarriers sampled based on a sampling rate or sampling function;
part of subcarriers truncated based on a subcarrier truncation length; and
a subcarrier indicated in a subcarrier set.

In an optional embodiment, the antenna measurement information includes at least one of the following:
phase information of at least one antenna element, panel, or port;
energy information of at least one antenna element, panel, or port;
time information of at least one antenna element, panel, or port;
angle information of at least one antenna element, panel, or port;
phase difference information of at least one antenna element, panel, or port;
energy difference information of at least one antenna element, panel, or port;
time difference information of at least one antenna element, panel, or port; and
angle difference information of at least one antenna element, panel, or port.

In an optional embodiment, the different positioning reference signals include at least one of the following:
different positioning reference signals in a same positioning reference signal resource set; and
different positioning reference signals in a same positioning reference signal resource subset; where
the positioning reference signal resource subset is predefined by a protocol or configured by a network.

In an optional embodiment, the apparatus further includes:
a fourth sending module, configured to send first configuration information to the first device, where the first configuration information includes at least one of the following:
the number of positioning reference signals in a positioning reference signal resource subset;
identification information of the positioning reference signals in the positioning reference signal resource subset; and
index information of the positioning reference signal resource subset.

In an optional embodiment, the apparatus further includes:
a fifth sending module, configured to send assistance information to the first device, where the assistance information is used to assist measurement and/or reporting of the first measurement information, and the assistance information includes at least one of the following:
identification information of a reference antenna element;
identification information of a reference antenna port;
identification information of a reference antenna panel;
the number of antenna elements for which measurement and/or reporting is requested;
the number of antenna ports for which measurement and/or reporting is requested;
the number of antenna panels for which measurement and/or reporting is requested;
identification information of an antenna element for which measurement and/or reporting is requested;
identification information of an antenna port for which measurement and/or reporting is requested;
identification information of an antenna panel for which measurement and/or reporting is requested; and
subcarrier preprocessing information.

In an optional embodiment, the subcarrier preprocessing information includes at least one of the following:
subcarrier sampling rate;
subcarrier sampling function;
subcarrier truncation length; and
subcarrier set.

In an optional embodiment, the first measurement information further includes at least one of the following:
identification information of a reference antenna element;
identification information of a reference antenna port;
identification information of a reference antenna panel;
identification information of an antenna element for measurement and/or reporting;
identification information of an antenna port for measurement and/or reporting; and identification information of an antenna panel for measurement and/or reporting.

In an optional embodiment, the apparatus further includes:
an eighth receiving module, configured to receive positioning capability information sent by the first device, where the positioning capability information is used to indicate at least one of the following:
whether measurement and/or reporting of first-path measurement information is supported;
the number of first paths supported for measurement and/or reporting;
the number of measurement values reportable for each first path;
whether measurement and/or reporting of additional-path measurement information is supported;
the number of additional paths supported for measurement and/or reporting;
the number of measurement values reportable for each additional path;
whether measurement and/or reporting for multi-antenna elements is supported;
the number of antenna elements supported for measurement and/or reporting;
the number of measurement values reportable for each antenna element;
whether measurement and/or reporting for multi-antenna ports is supported;
the number of antenna ports supported for measurement and reporting;
the number of measurement values reportable for each antenna port;
whether measurement and/or reporting for multi-antenna panels is supported;
the number of antenna panels supported for measurement and/or reporting; and
the number of measurement values reportable for each antenna panel.

In this embodiment of this application, the third device receives at least one of the first-path measurement information, the additional-path measurement information, the frequency domain measurement information, and the antenna measurement information reported by the first device, which can improve precision of machine learning-based positioning or carrier phase-based positioning. The third device can explicitly or implicitly indicate the type of the first measurement information by using the first indication information, so that more measurement information can be provided to the third device to further improve the positioning precision.

It should be noted that the positioning processing apparatus provided in the embodiments of this application is an apparatus capable of executing the foregoing positioning processing method, and all embodiments of the foregoing positioning processing method are applicable to the apparatus, with the same or similar beneficial effects achieved.

The positioning processing apparatus or positioning reference signal sending apparatus in the embodiments of this application may be an apparatus, or an apparatus or an electric device having an operating system, or may be a component, an integrated circuit, or a chip in a terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The positioning processing apparatus or positioning reference signal sending apparatus provided in the embodiments of this application is capable of implementing the processes implemented in the method embodiments in FIG. 1 to FIG. 4, with the same technical effects achieved. To avoid repetition, details are not described herein again.

Optionally, as shown in FIG. 8, an embodiment of this application further provides a communication device 800, including a processor 801, a memory 802, and a program or instructions stored in the memory 802 and executable on the processor 801. For example, when the communication device 800 is a first device and when the program or instructions are executed by the processor 801, the processes of the foregoing embodiments of the positioning processing method are implemented, with the same technical effects achieved. when the communication device 800 is a second device and when the program or instructions are executed by the processor 801, the processes of the foregoing embodiments of the positioning reference signal sending method are implemented, with the same technical effects achieved. When the communication device 800 is a third device and when the program or instructions are executed by the processor 801, the processes of the foregoing embodiments of the positioning processing method are implemented, with the same technical effects achieved. To avoid repetition, details are not described herein again.

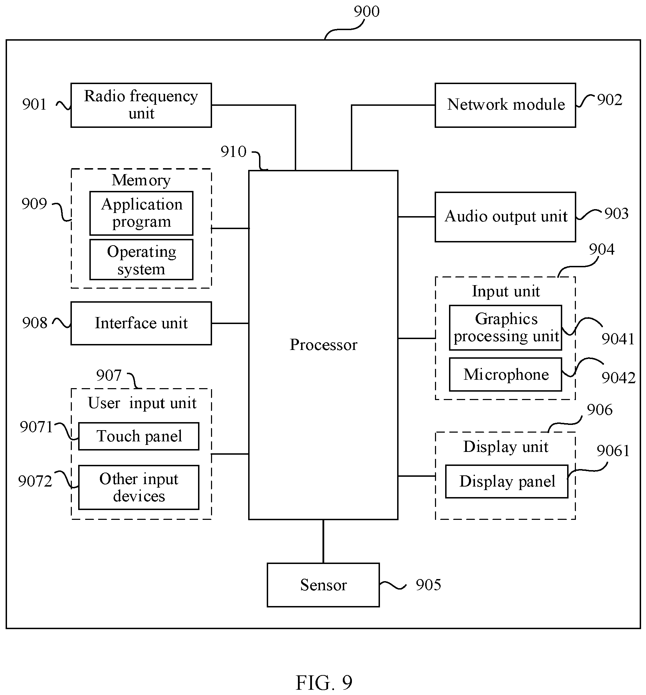

In a case that the first device is a terminal or the second device is a terminal, an embodiment of this application further provides a terminal, including a processor and a communication interface, the communication interface is configured to receive a first positioning reference signal; and the processor is configured to measure and /or report first measurement information based on the first positioning reference signal; where the first measurement information includes at least one of the following: first-path measurement information; additional-path measurement information; frequency domain measurement information; and antenna measurement information. Alternatively, the communication interface is configured to send first positioning reference signal according to second indication information, where the second indication information includes at least one of the following: the number of ports allowed to be mapped by the first positioning reference signal; identification information of a mapping port of the first positioning reference signal; the number of panels allowed to be mapped by the first positioning reference signal; identification information of a mapping panel of the first positioning reference signal; the number of antenna elements allowed to be mapped by the first positioning reference signal; and identification information of a mapping antenna element of the first positioning reference signal. The terminal embodiments correspond to the foregoing terminal-side method embodiments, and the implementation processes and implementations of the foregoing method embodiments can be applied to the terminal embodiments, with the same technical effects achieved. Specifically, FIG. 9 is a schematic diagram of a hardware structure of a terminal for implementing the embodiments of this application.

The terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) supplying power to the components, and the power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or a combination of some components, or the components disposed differently. Details are not described herein again.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, and the like. The user input unit 907 may include a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a power on/off key), a trackball, a mouse, a joystick, and the like. Details are not described herein.

In this embodiment of this application, the radio frequency unit 901 receives downlink data from a network-side device, and then sends the downlink data to the processor 910 for processing; and also sends uplink data to the network-side device. Generally, the radio frequency unit 901 includes but is not limited to an antenna, at least one amplifier, a transceiver, a coupler, a low noise amplifier, a duplexer, and the like.

The memory 909 may be configured to store software programs or instructions and various data. The memory 909 may include a program or instruction storage area and a data storage area. The program or instruction storage area may store an operating system, an application program or instruction required by at least one function (for example, a sound playback function or an image playback function), and the like. In addition, the memory 909 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 910 may include one or more processing units. Optionally, an application processor and a modem processor may be integrated in the processor 910. The application processor primarily processes an operating system, user interfaces, application programs or instructions, and the like. The modem processor primarily processes radio communication, for example, being a baseband processor. It can be understood that the modem processor may alternatively be not integrated in the processor 910.

The radio frequency unit 901 is configured to receive a first positioning reference signal; and the processor 910 is configured to measure and/or report first measurement information based on the first positioning reference signal; where the first measurement information includes at least one of the following: first-path measurement information; additional-path measurement information; frequency domain measurement information; and antenna measurement information.

Alternatively, the processor 910 is configured to send first positioning reference signal according to second indication information by using the radio frequency unit 901, where the second indication information includes at least one of the following: the number of ports allowed to be mapped by the first positioning reference signal; identification information of a mapping port of the first positioning reference signal; the number of panels allowed to be mapped by the first positioning reference signal; identification information of a mapping panel of the first positioning reference signal; the number of antenna elements allowed to be mapped by the first positioning reference signal; and identification information of a mapping antenna element of the first positioning reference signal.

In this embodiment of this application, the first device measures and/or reports at least one of the first-path measurement information, the additional-path measurement information, the frequency domain measurement information, and the antenna measurement information based on the first positioning reference signal, which can improve precision of machine learning-based positioning or carrier phase-based positioning. The third device can explicitly or implicitly indicate the type of the first measurement information by using the first indication information, so that more measurement information can be provided to the third device to further improve the positioning precision.

It should be noted that the positioning processing apparatus provided in the embodiments of this application is an apparatus capable of executing the foregoing positioning processing method, and all embodiments of the foregoing positioning processing method are applicable to the apparatus, with the same or similar beneficial effects achieved.

An embodiment of this application further provides a network-side device, including a processor and a communication interface. The communication interface is configured to receive first measurement information reported by a first device, where the first measurement information includes at least one of the following: first-path measurement information; additional-path measurement information; frequency domain measurement information; and antenna measurement information. The network-side device embodiments correspond to the foregoing network-side device method embodiments, and the implementation processes and implementations of the foregoing method embodiments can be applied to the network-side device embodiments, with the same technical effects achieved.

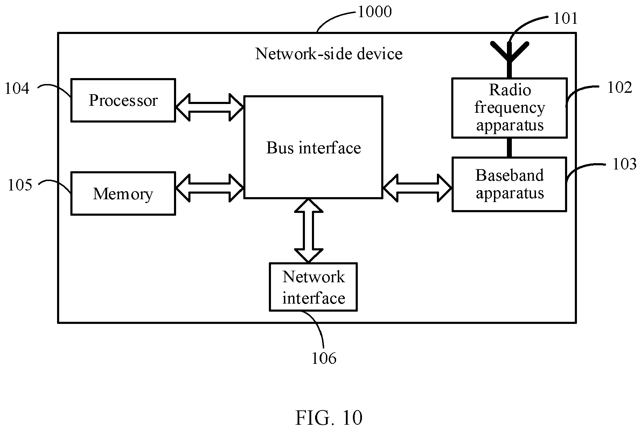

Specifically, an embodiment of this application further provides a network-side device. As shown in FIG. 10, the network-side device 1000 includes an antenna 101, a radio frequency apparatus 102, and a baseband apparatus 103. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes to-be-sent information, and sends the information to the radio frequency apparatus 102; and the radio frequency apparatus 102 processes the received information and then sends the information out by using the antenna 101.

The frequency band processing apparatus may be located in the baseband apparatus 103. The method performed by the network-side device in the foregoing embodiments may be implemented in the baseband apparatus 103, and the baseband apparatus 103 includes a processor 104 and a memory 105.

The baseband apparatus 103 may include, for example, at least one baseband board, where a plurality of chips are disposed on the baseband board. As shown in FIG. 10, one of the chips, for example, the processor 104, is connected to the memory 105, to invoke a program in the memory 105 to perform the operation of the network device shown in the foregoing method embodiments.

The baseband apparatus 103 may further include a network interface 106, configured to exchange information with the radio frequency apparatus 102, where the interface is, for example, a common public radio interface (common public radio interface, CPRI)

Specifically, the network-side device in this embodiment of the present invention further includes: instructions or a program stored in the memory 105 and executable on the processor 104. The processor 104 invokes the instructions or program in the memory 105 to execute the method executed by the modules shown in FIG. 10, with the same technical effects achieved. To avoid repetition, details are not repeated herein.

An embodiment of this application further provides a readable storage medium. The readable storage medium may be non-volatile or volatile. A program or instructions are stored in the readable storage medium. When the program or instructions are executed by a processor, the processes of the foregoing embodiments of the positioning processing method and the positioning reference signal sending method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing embodiments of the positioning processing method and the positioning reference signal sending method, with the same technical effects achieved. To avoid repetition, details are not repeated herein.

It should be understood that the chip mentioned in the embodiments of this application may also be referred to as a system-level chip, a system chip, a chip system, a system-on-chip, or the like.

An embodiment of this application further provides a computer program product, where the computer program product is stored in a non-transitory readable storage medium, and when being executed by at least one processor, the computer program product is configured to implement the processes of the foregoing embodiments of the positioning processing method and the positioning reference signal sending method, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A positioning processing method, comprising:
receiving, by a first device, a first positioning reference signal; and
measuring and/or reporting, by the first device, first measurement information based on the first positioning reference signal; wherein the first measurement information comprises at least one of the following:
first-path measurement information;
additional-path measurement information;
frequency domain measurement information; and
antenna measurement information.

2. The method according to claim 1, wherein the method further comprises:
receiving, by the first device, first indication information, wherein the first indication information is used to indicate at least one of the following of the first measurement information that is measured and/or reported by the first device:
type of the first measurement information; and
quantity of the first measurement information.

3. The method according to claim 2, wherein the first indication information carries first information for explicitly indicating the type of the first measurement information, and the first information comprises at least one of the following:
first-path measurement information;
additional-path measurement information;
frequency domain measurement information;
antenna measurement information;
delay information;
phase information;
energy information;
angle information;
delay difference information;
phase difference information;
energy difference information;
angle difference information;
subcarrier phase information;
subcarrier energy information;
subcarrier phase difference information; and
subcarrier energy difference information.

4. The method according to claim 2, wherein the first indication information carries a positioning method for implicitly indicating a type of the first measurement information corresponding to the positioning method; and the positioning method comprises at least one of the following:
carrier phase-based positioning; and
machine learning-based positioning.

5. The method according to claim 1, wherein the first-path measurement information comprises at least one of the following:
first-path phase information of at least one positioning reference signal;
first-path phase information of at least one receive beam;
first-path phase information of at least one antenna element, panel, or port;
first-path phase difference information of different antenna elements, panels, or ports;
first-path phase difference information of different positioning reference signals;
first-path time information of at least one positioning reference signal;
first-path time information of at least one receive beam;
first-path time information of at least one antenna element, panel, or port;
first-path time difference information of different antenna elements, panels, or ports;
first-path time difference information of different positioning reference signals;
first-path energy information of at least one positioning reference signal;
first-path energy information of at least one receive beam;
first-path energy information of at least one antenna element, panel, or port;
first-path energy difference information of different antenna elements, panels, or ports;
first-path energy difference information of different positioning reference signals;
first-path angle information of at least one positioning reference signal;
first-path angle information of at least one receive beam;
first-path angle information of at least one antenna panel or port;
first-path angle difference information of different antenna panels or ports; and
first-path angle difference information of different positioning reference signals.

6. The method according to claim 1, wherein the additional-path measurement information comprises at least one of the following:
additional-path phase information of at least one positioning reference signal;
additional-path phase information of at least one receive beam;
additional-path phase information of at least one antenna element, panel, or port;
additional-path phase difference information of different antenna elements, panels, or ports;
additional-path phase difference information of different positioning reference signals;
additional-path time information of at least one positioning reference signal;
additional-path time information of at least one receive beam;
additional-path time information of at least one antenna element, panel, or port;
additional-path time difference information of different antenna elements, panels, or ports;
additional-path time difference information of different positioning reference signals;
additional-path energy information of at least one positioning reference signal;
additional-path energy information of at least one receive beam;
additional-path energy information of at least one antenna element, panel, or port;
additional-path energy difference information of different antenna elements, panels, or ports;
additional-path energy difference information of different positioning reference signals;
additional-path angle information of at least one positioning reference signal;
additional-path angle information of at least one receive beam;
additional-path angle information of at least one antenna panel or port;
additional-path angle difference information of different antenna panels or ports; and
additional-path angle difference information of different positioning reference signals.

7. The method according to claim 1, wherein the frequency domain measurement information comprises at least one of the following:
first-path energy information of a subcarrier on at least one antenna element, panel, or port;
additional-path energy information of a subcarrier on at least one antenna element, panel, or port;
first-path phase information of a subcarrier on at least one antenna element, panel, or port;
additional-path phase information of a subcarrier on at least one antenna element, panel, or port;
first-path energy information of a subcarrier for at least one positioning reference signal;
additional-path energy information of a subcarrier for at least one positioning reference signal;
first-path phase information of a subcarrier for at least one positioning reference signal;
additional-path phase information of a subcarrier for at least one positioning reference signal;
first-path energy difference information of subcarriers on different antenna elements, panels, or ports;
additional-path energy difference information of subcarriers on different antenna elements, panels, or ports;
first-path energy difference information of subcarriers for different positioning reference signals;
additional-path energy difference information of subcarriers for different positioning reference signals;
first-path phase difference information of subcarriers on different antenna elements, panels, or ports;
additional-path phase difference information of subcarriers on different antenna elements, panels, or ports;
first-path phase difference information of subcarriers for different positioning reference signals;
additional-path phase difference information of subcarriers for different positioning reference signals;
energy information of a subcarrier on at least one antenna element, panel, or port;
phase information of a subcarrier on at least one antenna element, panel, or port;
energy information of a subcarrier for at least one positioning reference signal;
phase information of a subcarrier for at least one positioning reference signal;
energy difference information of subcarriers on different antenna elements, panels, or ports;
phase difference information of subcarriers on different antenna elements, panels, or ports;
energy difference information of subcarriers for different positioning reference signals; and
phase difference information of subcarriers for different positioning reference signals.

8. The method according to claim 7, wherein a subcarrier is determined based on subcarrier preprocessing information indicated by a third device or specified by a protocol.

9. The method according to claim 7 or 8, wherein a subcarrier comprises any one of the following:
all subcarriers matching a bandwidth;
part of subcarriers sampled based on a sampling rate or sampling function;
part of subcarriers truncated based on a subcarrier truncation length; and
a subcarrier indicated in a subcarrier set.

10. The method according to claim 1, wherein the antenna measurement information comprises at least one of the following:
phase information of at least one antenna element, panel, or port;
energy information of at least one antenna element, panel, or port;
time information of at least one antenna element, panel, or port;
angle information of at least one antenna element, panel, or port;
phase difference information of at least one antenna element, panel, or port;
energy difference information of at least one antenna element, panel, or port;
time difference information of at least one antenna element, panel, or port; and
angle difference information of at least one antenna element, panel, or port.

11. The method according to claim 5, 6, or 7, wherein the different positioning reference signals comprise at least one of the following:
different positioning reference signals in a same positioning reference signal resource set; and
different positioning reference signals in a same positioning reference signal resource subset; wherein
the positioning reference signal resource subset is predefined by a protocol or configured by a network.

12. The method according to claim 11, wherein the method further comprises:
receiving, by the first device, first configuration information, wherein the first configuration information comprises at least one of the following:
the number of positioning reference signals in a positioning reference signal resource subset;
identification information of the positioning reference signals in the positioning reference signal resource subset; and
index information of the positioning reference signal resource subset.

13. The method according to claim 1, wherein the method further comprises:
receiving, by the first device, assistance information, wherein the assistance information is used to assist measurement and/or reporting of the first measurement information, and the assistance information comprises at least one of the following:
identification information of a reference antenna element;
identification information of a reference antenna port;
identification information of a reference antenna panel;
the number of antenna elements for which measurement and/or reporting is requested;
the number of antenna ports for which measurement and/or reporting is requested;
the number of antenna panels for which measurement and/or reporting is requested;
identification information of an antenna element for which measurement and/or reporting is requested;
identification information of an antenna port for which measurement and/or reporting is requested;
identification information of an antenna panel for which measurement and/or reporting is requested; and
subcarrier preprocessing information.

14. The method according to claim 8 or 13, wherein the subcarrier preprocessing information comprises at least one of the following:
subcarrier sampling rate;
subcarrier sampling function;
subcarrier truncation length; and
subcarrier set.

15. The method according to claim 1, wherein the first measurement information further comprises at least one of the following:
identification information of a reference antenna element;
identification information of a reference antenna port;
identification information of a reference antenna panel;
identification information of an antenna element for measurement and/or reporting;
identification information of an antenna port for measurement and/or reporting; and
identification information of an antenna panel for measurement and/or reporting.

16. The method according to claim 1, wherein the method further comprises:
sending, by the first device, positioning capability information to a third device, wherein the positioning capability information is used to indicate at least one of the following:
whether measurement and/or reporting of first-path measurement information is supported;
the number of first paths supported for measurement and/or reporting;
the number of measurement values reportable for each first path;
whether measurement and/or reporting of additional-path measurement information is supported;
the number of additional paths supported for measurement and/or reporting;
the number of measurement values reportable for each additional path;
whether measurement and/or reporting for multi-antenna elements is supported;
the number of antenna elements supported for measurement and/or reporting;
the number of measurement values reportable for each antenna element;
whether measurement and/or reporting for multi-antenna ports is supported;
the number of antenna ports supported for measurement and reporting;
the number of measurement values reportable for each antenna port;
whether measurement and/or reporting for multi-antenna panels is supported;
the number of antenna panels supported for measurement and/or reporting; and
the number of measurement values reportable for each antenna panel.

17. A positioning reference signal sending method, comprising:
sending, a second device, first positioning reference signal according to second indication information, wherein the second indication information comprises at least one of the following:
the number of ports allowed to be mapped by the first positioning reference signal;
identification information of a mapping port of the first positioning reference signal;
the number of panels allowed to be mapped by the first positioning reference signal;
identification information of a mapping panel of the first positioning reference signal;
the number of antenna elements allowed to be mapped by the first positioning reference signal; and
identification information of a mapping antenna element of the first positioning reference signal.

18. A positioning processing method, comprising:
receiving, by a third device, first measurement information reported by a first device, wherein the first measurement information comprises at least one of the following:
first-path measurement information;
additional-path measurement information;
frequency domain measurement information; and
antenna measurement information.

19. The method according to claim 18, wherein the method further comprises:
sending, by the third device, first indication information to the first device, wherein the first indication information is used to indicate at least one of the following of the first measurement information that is measured and/or reported by the first device:
type of the first measurement information; and
quantity of the first measurement information.

20. The method according to claim 19, wherein the first indication information carries first information for explicitly indicating the type of the first measurement information; and the first information comprises at least one of the following:
first-path measurement information;
additional-path measurement information;
frequency domain measurement information;
antenna measurement information;
delay information;
phase information;
energy information;
angle information;
delay difference information;
phase difference information;
energy difference information;
angle difference information;
subcarrier phase information;
subcarrier energy information;
subcarrier phase difference information; and
subcarrier energy difference information.

21. The method according to claim 19, wherein the first indication information carries a positioning method for implicitly indicating a type of the first measurement information corresponding to the positioning method; and the positioning method comprises at least one of the following:
carrier phase-based positioning; and
machine learning-based positioning.

22. The method according to claim 19, wherein the first-path measurement information comprises at least one of the following:
first-path phase information of at least one positioning reference signal;
first-path phase information of at least one receive beam;
first-path phase information of at least one antenna element, panel, or port;
first-path phase difference information of different antenna elements, panels, or ports;
first-path phase difference information of different positioning reference signals;
first-path time information of at least one positioning reference signal;
first-path time information of at least one receive beam;
first-path time information of at least one antenna element, panel, or port;
first-path time difference information of different antenna elements, panels, or ports;
first-path time difference information of different positioning reference signals;
first-path energy information of at least one positioning reference signal;
first-path energy information of at least one receive beam;
first-path energy information of at least one antenna element, panel, or port;
first-path energy difference information of different antenna elements, panels, or ports;
first-path energy difference information of different positioning reference signals;
first-path angle information of at least one positioning reference signal;
first-path angle information of at least one receive beam;
first-path angle information of at least one antenna panel or port;
first-path angle difference information of different antenna panels or ports; and
first-path angle difference information of different positioning reference signals.

23. The method according to claim 18, wherein the additional-path measurement information comprises at least one of the following:
additional-path phase information of at least one positioning reference signal;
additional-path phase information of at least one receive beam;
additional-path phase information of at least one antenna element, panel, or port;
additional-path phase difference information of different antenna elements, panels, or ports;
additional-path phase difference information of different positioning reference signals;
additional-path time information of at least one positioning reference signal;
additional-path time information of at least one receive beam;
additional-path time information of at least one antenna element, panel, or port;
additional-path time difference information of different antenna elements, panels, or ports;
additional-path time difference information of different positioning reference signals;
additional-path energy information of at least one positioning reference signal;
additional-path energy information of at least one receive beam;
additional-path energy information of at least one antenna element, panel, or port;
additional-path energy difference information of different antenna elements, panels, or ports;
additional-path energy difference information of different positioning reference signals;
additional-path angle information of at least one positioning reference signal;
additional-path angle information of at least one receive beam;
additional-path angle information of at least one antenna panel or port;
additional-path angle difference information of different antenna panels or ports; and
additional-path angle difference information of different positioning reference signals.

24. The method according to claim 18, wherein the frequency domain measurement information comprises at least one of the following:
first-path energy information of a subcarrier on at least one antenna element, panel, or port;
additional-path energy information of a subcarrier on at least one antenna element, panel, or port;
first-path phase information of a subcarrier on at least one antenna element, panel, or port;
additional-path phase information of a subcarrier on at least one antenna element, panel, or port;
first-path energy information of a subcarrier for at least one positioning reference signal;
additional-path energy information of a subcarrier for at least one positioning reference signal;
first-path phase information of a subcarrier for at least one positioning reference signal;
additional-path phase information of a subcarrier for at least one positioning reference signal;
first-path energy difference information of subcarriers on different antenna elements, panels, or ports;
additional-path energy difference information of subcarriers on different antenna elements, panels, or ports;
first-path energy difference information of subcarriers for different positioning reference signals;
additional-path energy difference information of subcarriers for different positioning reference signals;
first-path phase difference information of subcarriers on different antenna elements, panels, or ports;
additional-path phase difference information of subcarriers on different antenna elements, panels, or ports;
first-path phase difference information of subcarriers for different positioning reference signals;
additional-path phase difference information of subcarriers for different positioning reference signals;
energy information of a subcarrier on at least one antenna element, panel, or port;
phase information of a subcarrier on at least one antenna element, panel, or port;
energy information of a subcarrier for at least one positioning reference signal;
phase information of a subcarrier for at least one positioning reference signal;
energy difference information of subcarriers on different antenna elements, panels, or ports;
phase difference information of subcarriers on different antenna elements, panels, or ports;
energy difference information of subcarriers for different positioning reference signals; and
phase difference information of subcarriers for different positioning reference signals.

25. The method according to claim 24, wherein the subcarrier is determined based on subcarrier preprocessing information, and the subcarrier preprocessing information is indicated by the third device or specified by a protocol.

26. The method according to claim 24 or 25, wherein the subcarrier comprises any one of the following:
all subcarriers matching a bandwidth;
part of subcarriers sampled based on a sampling rate or sampling function;
part of subcarriers truncated based on a subcarrier truncation length; and
a subcarrier indicated in a subcarrier set.

27. The method according to claim 18, wherein the antenna measurement information comprises at least one of the following:
phase information of at least one antenna element, panel, or port;
energy information of at least one antenna element, panel, or port;
time information of at least one antenna element, panel, or port;
angle information of at least one antenna element, panel, or port;
phase difference information of at least one antenna element, panel, or port;
energy difference information of at least one antenna element, panel, or port;
time difference information of at least one antenna element, panel, or port; and
angle difference information of at least one antenna element, panel, or port.

28. The method according to claim 22, 23, or 24, wherein the different positioning reference signals comprise at least one of the following:
different positioning reference signals in a same positioning reference signal resource set; and
different positioning reference signals in a same positioning reference signal resource subset; wherein
the positioning reference signal resource subset is predefined by a protocol or configured by a network.

29. The method according to claim 28, wherein the method further comprises:
sending, by the third device, first configuration information to the first device, wherein the first configuration information comprises at least one of the following:
the number of positioning reference signals in a positioning reference signal resource subset;
identification information of the positioning reference signals in the positioning reference signal resource subset; and
index information of the positioning reference signal resource subset.

30. The method according to claim 18, wherein the method further comprises:
sending, by the third device, assistance information to the first device, wherein the assistance information is used to assist measurement and/or reporting of the first measurement information, and the assistance information comprises at least one of the following:
identification information of a reference antenna element;
identification information of a reference antenna port;
identification information of a reference antenna panel;
the number of antenna elements for which measurement and/or reporting is requested;
the number of antenna ports for which measurement and/or reporting is requested;
the number of antenna panels for which measurement and/or reporting is requested;
identification information of an antenna element for which measurement and/or reporting is requested;
identification information of an antenna port for which measurement and/or reporting is requested;
identification information of an antenna panel for which measurement and/or reporting is requested; and
subcarrier preprocessing information.

31. The method according to claim 25 or 30, wherein the subcarrier preprocessing information comprises at least one of the following:
subcarrier sampling rate;
subcarrier sampling function;
subcarrier truncation length; and
subcarrier set.

32. The method according to claim 18, wherein the first measurement information further comprises at least one of the following:
identification information of a reference antenna element;
identification information of a reference antenna port;
identification information of a reference antenna panel;
identification information of an antenna element for measurement and/or reporting;
identification information of an antenna port for measurement and/or reporting; and
identification information of an antenna panel for measurement and/or reporting.

33. The method according to claim 19, wherein the method further comprises:
receiving, by the third device, positioning capability information sent by the first device, wherein the positioning capability information is used to indicate at least one of the following:
whether measurement and/or reporting of first-path measurement information is supported;
the number of first paths supported for measurement and/or reporting;
the number of measurement values reportable for each first path;
whether measurement and/or reporting of additional-path measurement information is supported;
the number of additional paths supported for measurement and/or reporting;
the number of measurement values reportable for each additional path;
whether measurement and/or reporting for multi-antenna elements is supported;
the number of antenna elements supported for measurement and/or reporting;
the number of measurement values reportable for each antenna element;
whether measurement and/or reporting for multi-antenna ports is supported;
the number of antenna ports supported for measurement and reporting;
the number of measurement values reportable for each antenna port;
whether measurement and/or reporting for multi-antenna panels is supported;
the number of antenna panels supported for measurement and/or reporting; and
the number of measurement values reportable for each antenna panel.

34. A positioning processing apparatus, comprising:
a first receiving module, configured to receive a first positioning reference signal; and
a processing module, configured to measure and/or report first measurement information based on the first positioning reference signal; wherein the first measurement information comprises at least one of the following:
first-path measurement information;
additional-path measurement information;
frequency domain measurement information; and
antenna measurement information.

35. A positioning reference signal sending apparatus, comprising:
a first sending module, configured to send first positioning reference signal according to second indication information, wherein the second indication information comprises at least one of the following:
the number of ports allowed to be mapped by the first positioning reference signal;
identification information of a mapping port of the first positioning reference signal;
the number of panels allowed to be mapped by the first positioning reference signal;
identification information of a mapping panel of the first positioning reference signal;
the number of antenna elements allowed to be mapped by the first positioning reference signal; and
identification information of a mapping antenna element of the first positioning reference signal.

36. A positioning processing apparatus, comprising:
a second receiving module, configured to receive first measurement information reported by a first device, wherein the first measurement information comprises at least one of the following:
first-path measurement information;
additional-path measurement information;
frequency domain measurement information; and
antenna measurement information.

37. A communication device, comprising a processor, a memory, and a program or instructions stored in the memory and executable on the processor, wherein when the program or instructions are executed by the processor, the steps of the positioning processing method according to any one of claims 1 to 16 are implemented; or when the program or instructions are executed by the processor, the steps of the positioning reference signal sending method according to claim 17 are implemented; or when the program or instructions are executed by the processor, the steps of the positioning processing method according to any one of claims 18 to 33 are implemented.

38. A readable storage medium, wherein the readable storage medium stores a program or instructions, and when the program or instructions are executed by the processor, the steps of the positioning processing method according to any one of claims 1 to 16 are implemented, or the steps of the positioning reference signal sending method according to claim 17 are implemented, or the steps of the positioning processing method according to any one of claims 18 to 33 are implemented.

39. A chip, wherein the chip comprises a processor and a communication interface, the communication interface is coupled to the processor, and the processor is configured to execute a program or instructions to implement the steps of the positioning processing method according to any one of claims 1 to 16, or the steps of the positioning reference signal sending method according to claim 17, or the steps of the positioning processing method according to any one of claims 18 to 33.

40. A computer program product, wherein the computer program product is stored in a non-volatile storage medium, and the computer program product is executed by at least one processor to implement the steps of the positioning processing method according to any one of claims 1 to 16, or the steps of the positioning reference signal sending method according to claim 17, or the steps of the positioning processing method according to any one of claims 18 to 33.

41. A communication device, configured to perform the steps of the positioning processing method according to any one of claims 1 to 16, or the steps of the positioning reference signal sending method according to claim 17, or the steps of the positioning processing method according to any one of claims 18 to 33.
